# DEMANDE DE BREVET EUROPEEN

(11) **EP 0 889 225 A1**
(43) Date de publication de la demande: **07.01.1999**
(21) Numéro de dépôt: 97402384.8
(22) Date de dépôt: 10.10.1997
(51) Int. Cl.: F02F 1/24, F02B 23/10

(54) **Moteur à injection directe et allumage commandé**

(30) Priorité: 01.07.1997 FR 9708269
(71) Demandeur: RENAULT, 92109 Boulogne-Billancourt (FR)
(72) Inventeur: Cuvillier, Paul, 27200 Vernon (FR); Lucas, Jean Christophe, 95000 Cergy (FR)
(74) Mandataire: Fernandez, Francis

(57) **Abrégé**

Le moteur comprend, pour chaque cylindre, une chambre de combustion (32) en forme de toit comportant au moins deux orifices d'admission latéraux 14, 15 et deux orifices d'échappement 7, 8, un dôme creux 4 situé sur la face inférieure 2 de la culasse (1) et approximativement centré sur l'axe du cylindre-moteur, ainsi qu'un injecteur 5 et une bougie 11 débouchant tous les deux dans le dôme 4.

## Description

L'invention concerne les moteurs à combustion interne à injection directe et allumage commandé, et plus particulièrement les culasses de ces moteurs.

Par opposition aux moteurs à injection indirecte dans lesquels les injecteurs de carburant sont situés en amont de la chambre de combustion et débouchent dans les conduits d'admission, les moteurs à injection directe comportent des injecteurs débouchant directement dans les chambres de combustion.

L'invention propose un moteur à combustion interne à injection directe et allumage commandé.

Selon une caractéristique générale de l'invention, ce moteur comprend, pour chaque cylindre une chambre de combustion en forme générale de toit comportant au moins deux orifices d'admission latéraux et deux orifices d'échappement, un dôme creux situé sur la face inférieure de la culasse et approximativement centré sur l'axe du cylindre, ainsi qu'un injecteur et une bougie débouchant tous les deux dans le dôme.

Selon un mode de réalisation de l'invention, l'injecteur est incliné par rapport à l'axe du cylindre en direction des conduits d'admission et débouche dans le dôme entre les deux orifices d'admission latéraux. La bougie est quant à elle inclinée vers les conduits d'échappement de façon à être sensiblement orthogonale au plan contenant les orifices d'échappement.

La distance à l'intérieur du dôme, entre l'extrémité de l'injecteur et l'extrémité de la bougie, est faible, par exemple de l'ordre de 17 mm. Cette proximité du jet de l'injecteur et de la bougie, en combinaison avec la compacité de la zone de combustion, contribue à assurer une bonne combustion des mélanges à charge stratifiée (carburant sous forme liquide; environ 60° avant le Point Mort Haut).

Selon un mode préféré de réalisation de l'invention, la culasse comporte en outre un orifice central d'admission disposé entre les deux plans diamétraux verticaux, perpendiculaires à l'arête du toit, des deux orifices d'admission latéraux; cet orifice central est en retrait par rapport à ces deux orifices d'admission latéraux. L'orifice central d'admission d'une part, et les deux orifices d'admission latéraux d'autre part, sont respectivement situés dans deux plans sensiblement parallèles. En d'autres termes, selon ce mode de réalisation, la culasse comporte cinq soupapes avec l'injecteur placé dans le dôme entre les deux soupapes d'admission latérales.

La culasse comporte avantageusement sur sa face inférieure un bossage incorporant le dôme et possédant un prolongement s'étendant entre les orifices d'admission latéraux et incorporant l'orifice central d'admission.

Selon ce mode de réalisation, le dôme est donc directement balayé par la soupape d'admission centrale. Celle-ci est placée en retrait par rapport aux deux autres soupapes d'admission, mais son axe reste parallèle à ces deux autres soupapes d'admission. Un tel mode de réalisation est particulièrement avantageux pour les combustions à charge stratifiée.

Le moteur comprend également un piston coulissant dans le cylindre, dont la face supérieure, délimitant inférieurement la chambre de combustion, est plane. En variante, cette face supérieure a la forme d'un bol, de préférence centré. En outre, la face supérieure du piston peut épouser au moins partiellement la forme de la face inférieure de la culasse.

Ces caractéristiques permettent d'optimiser la combustion stratifiée et d'obtenir notamment un taux de compression compris entre 10 et 12.

D'autres avantages et caractéristiques de l'invention apparaîtront à l'examen de la description détaillée d'un mode de réalisation, nullement limitatif, et des dessins annexés, sur lesquels :
la figure 1 est une vue schématique partielle en perspective d'une culasse selon l'invention,
la figure 2 est une vue de dessus schématique de la face supérieure de la culasse de la figure 1, et
la figure 3 est une vue schématique de côté d'un cylindre équipé d'un piston et d'une culasse selon l'invention.

Sur les figures, la référence 1 désigne une culasse pour moteur à injection directe. Seule la partie correspondant à un cylindre a été figurée, cette partie se répétant à l'identique pour les autres cylindres.

La face inférieure 2 de la culasse 1 délimitant supérieurement la chambre de combustion 32 est en forme de toit dont l'arête 3 s'étend entre les orifices d'échappement et les orifices d'admission.

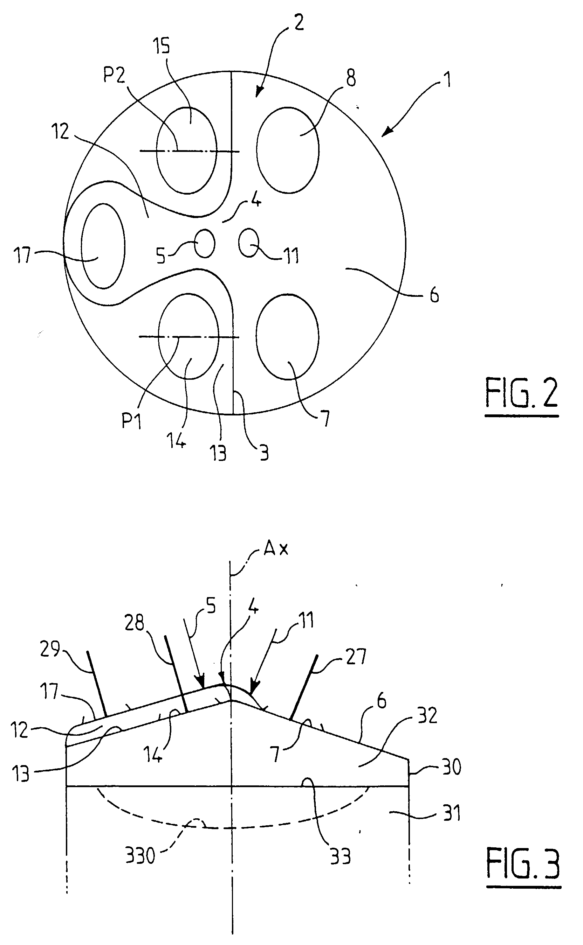

L'arête 3 du toit aboutit à un dôme 4 situé sur la face inférieure de la culasse et approximativement centré par rapport à l'axe Ax du cylindre 30 (figure 3). Bien que le dôme puisse être centré sur cet axe Ax, il est ici légèrement décalé, de 3 mm environ, du côté de l'admission.

Ce dôme 4 possède un orifice recevant un injecteur de carburant 5 dont l'extrémité délivrant le jet de carburant débouche directement dans la chambre de combustion 32.

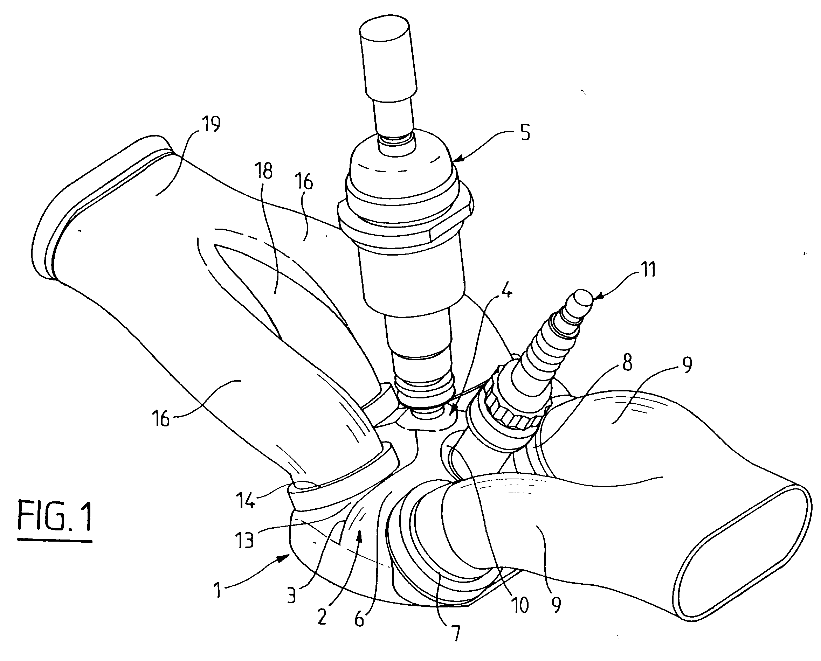

L'arête 3 du toit de la culasse ménage sur le toit, de part et d'autre de l'arête, deux plans inclinés 6 et 13. Sur le plan incliné 6, sont ménagés deux orifices d'échappement 7 et 8 recevant respectivement deux conduits d'échappement jumelés 9. Cette face inclinée 6 comporte également un orifice 10 débouchant à l'intérieur du dôme 4 et recevant une bougie d'allumage 11. Comme on peut le voir sur les figures 1 et 3, cette bougie 11 est inclinée vers l'échappement de sorte que son axe soit sensiblement orthogonal au plan contenant les orifices d'échappement 7 et 8, c'est-à-dire au plan incliné 6. En d'autres termes, l'axe de la bougie 11 est sensiblement parallèle à la queue des soupapes d'échappement 27 (figure 3). La bougie est par exemple inclinée de 27° environ par rapport à l'axe Ax du cylindre.

L'injecteur 5 est quant à lui incliné vers l'admission, par exemple d'un angle de 10° par rapport à l'axe du cylindre-moteur, tandis que son angle de jet est d'environ 80°.

Sur l'autre plan incliné 13 de la face supérieure 2 de la culasse, sont ménagés deux orifices d'admission latéraux 13 et 15 recevant respectivement deux conduits d'admission latéraux jumelés 16. L'injecteur 5 est placé dans le dôme entre les deux soupapes d'admission latérales 28 coopérant avec les deux orifices d'admission latéraux.

Par ailleurs, la face inférieure de la culasse comporte également un orifice d'admission central 17 placé entre les plans verticaux diamétraux P1 et P2, perpendiculaires à l'arête 3 du toit, des deux orifices d'admission latéraux 14 et 15 (figure 2). Un conduit central d'admission 18 est fixé sur l'orifice 17 et rejoint les deux conduits latéraux 16 pour former avec ceux-ci une branche d'admission commune 19. L'orifice d'admission central 17 est placé en retrait par rapport aux deux orifices d'admission latéraux, c'est-à-dire qu'il est plus éloigné de l'arête du toit que ne le sont les deux orifices d'admission latéraux 14 et 15. En outre, les deux orifices d'admission latéraux 14 et 15 ainsi que l'orifice central d'admission sont respectivement situés dans deux plans sensiblement parallèles.

Plus précisément, alors que les deux orifices d'admission latéraux 14 et 15 sont situés dans le plan incliné 13 de la face supérieure de la culasse, l'orifice central d'admission 17 est situé sur la face supérieure plane d'un prolongement 12 d'un bossage situé sur la face supérieure de la culasse. Ce bossage incorpore le dôme 4 et s'étend entre les deux orifices d'admission latéraux 14 et 15 jusqu'au voisinage du bord de la culasse.

Ainsi, selon ce mode de réalisation, le dôme 4 est directement balayé par la soupape d'admission centrale 29 qui est placée en retrait par rapport aux deux autres soupapes d'admission 28, mais dont l'axe reste parallèle aux axes de ces deux soupapes d'admission latérales.

L'invention permet d'obtenir une bonne combustion à charge stratifiée, en raison notamment de la proximité du jet de l'injecteur et de l'extrémité de la bougie (par exemple 17 mm) et de la compacité de la zone de combustion à l'intérieur du dôme (hauteur du dôme environ 13 mm, angle d'ouverture du dôme au sommet environ 105°).

En outre, une petite zone de chasse est obtenue entre les soupapes d'admission latérales et la soupape d'admission centrale.

En variante, la soupape d'admission centrale 29 peut être supprimée. Dans ce cas, la culasse selon l'invention est une culasse à quatre soupapes par cylindre permettant également la mise en place d'un injecteur directement dans la chambre de combustion. Toutefois, même dans ce cas, le dôme de confinement 4 est conservé pour notamment favoriser la combustion à charge stratifiée.

Comme illustré sur la figure 3, le cylindre 30 comporte un piston 31 coulissant à l'intérieur de celui-ci, dont la face supérieure 33 délimite inférieurement la chambre de combustion 32.

Cette face supérieure 33 peut être plane, ou, présenter la forme d'un bol 330, de préférence centré sur l'axe Ax du cylindre, afin d'optimiser le phénomène de stratification (transport du carburant liquide vers la bougie). Par ailleurs, cette face supérieure du piston peut être au moins partiellement en forme de toit complémentaire à celui de la culasse, pour notamment obtenir un taux de compression compris entre 10 et 12.

L'angle de jet de l'injecteur par rapport à l'axe du cylindre-moteur peut être ajusté pour que le jet de carburant tangente le point d'allumage, pour qu'il n'y ait pas d'interaction entre le jet de carburant et les soupapes d'admission à l'ouverture de ces dernières, et pour que le jet ne vienne pas en contact sur la frontière séparant la cavité du dôme du reste de la chambre de combustion.

De même, l'inclinaison de la bougie 11 peut être réglable de façon à optimiser la position relative jet de carburant/point d'allumage.

## Revendications

1. Moteur à combustion interne à injection directe et allumage commandé, caractérisé par le fait qu'il comprend, pour chaque cylindre, une chambre de combustion (32) en forme de toit comportant au moins deux orifices d'admission latéraux (14, 15) et deux orifices d'échappement (7, 8), un dôme creux (4) situé sur la face inférieure (2) de la culasse (1) et approximativement centré sur l'axe (Ax) du cylindre (30), ainsi qu'un injecteur (5) et une bougie (11) débouchant tous les deux dans le dôme (4).

2. Moteur selon la revendication 1, caractérisé par le fait que l'injecteur (5) est incliné par rapport à l'axe (Ax) du cylindre en direction des conduits d'admission et débouche dans le dôme (4) entre les deux orifices d'admission latéraux, et par le fait que la bougie (11) est inclinée vers les conduits d'échappement de façon à être sensiblement orthogonale au plan (6) contenant les orifices d'échappement.

3. Moteur selon la revendication 1 ou 2, caractérisé par le fait que la distance à l'intérieur du dôme (4), entre l'extrémité de l'injecteur (5) et l'extrémité de la bougie (11), est de l'ordre de 17 mm.

4. Moteur selon l'une des revendications précédentes, caractérisé par le fait que l'injecteur (5) est incliné d'environ 10 degrés par rapport à l'axe du cylindre.

5. Moteur selon l'une des revendications précédentes, caractérisé par le fait que la bougie (11) est inclinée d'environ 27 degrés par rapport à l'axe du cylindre.

6. Moteur selon l'une des revendications précédentes, caractérisé par le fait que la culasse (1) comporte en outre un orifice central d'admission (17) disposé entre les deux plans diamétraux verticaux (P1, P2), perpendiculaires à l'arête (3) du toit, des deux orifices d'admission latéraux (14, 15) et en retrait par rapport à ces deux orifices d'admission latéraux, et par le fait que l'orifice central d'admission (17) et les deux orifices d'admission latéraux sont respectivement situés dans deux plans sensiblement parallèles.

7. Moteur selon la revendication 6, caractérisé par le fait que la culasse (1) comporte sur sa face inférieure (2) un bossage (4, 12) incorporant le dôme (4) et possédant un prolongement (12) s'étendant entre les orifices d'admission latéraux (14, 15) et incorporant l'orifice central d'admission (17).

8. Moteur selon l'une des revendications précédentes, caractérisé par le fait qu'il comprend un piston (31) coulissant dans le cylindre, dont la face supérieure (33), délimitant inférieurement la chambre de combustion (32), est plane.

9. Moteur selon l'une des revendications 1 à 7, caractérisé par le fait qu'il comprend un piston coulissant dans le cylindre, dont la face supérieure (330), délimitant inférieurement la chambre de combustion, a la forme d'un bol, de préférence centré.

10. Moteur selon l'une des revendications précédentes, caractérisé par le fait qu'il comprend un piston (31) coulissant dans le cylindre, dont la face supérieure, délimitant inférieurement la chambre de combustion, épouse au moins partiellement la forme de la face inférieure de la culasse.
